Europäisches Patentamt

European Patent Office

Office européen des brevets

(11) Publication number: **0 479 402 A2**

## EUROPEAN PATENT APPLICATION

(21) Application number: **91300853.8**

(22) Date of filing: **01.02.91**

(51) Int. Cl.5: **C05F 11/00**, C05G 3/00, C05F 11/08

(30) Priority: **04.10.90 JP 268067/90**
**31.10.90 JP 296801/90**

(43) Date of publication of application:
**08.04.92 Bulletin 92/15**

(84) Designated Contracting States:
**BE CH DE FR GB IT LI LU NL**

(71) Applicant: **Iijima, Ryusuke**
**2817-62 Kosugaya cho, Sakaeku**
**Yokohama City 247, Kanagawa(JP)**

(72) Inventor: **Iijima, Ryusuke**
**2817-62 Kosugaya cho, Sakaeku**
**Yokohama City 247, Kanagawa(JP)**

(74) Representative: **Copp, David Christopher et al**
**Dummett Copp & Co. 14 The Square**
**Martlesham Heath**
**Ipswich Suffolk IP5 7SL(GB)**

(54) **Fertiliser.**

(57) This invention relates to a plant food, to a mycelial fertiliser and to a method of producing this fertiliser in all of which an essential constituent is purified pyrolignous acid.

The plant food includes 97-80 parts by weight of purified pyrolignous acid and 3-20 parts by weight of saccharide containing glucose.

The mycelial fertiliser consists predominantly of thermoactinomyces as mycelium which is obtained by incubation and fermentation on a porous carrier at a pH of 7.5-9.5, in addition to purified pyrolignous acid.

EP 0 479 402 A2

This invention relates to a fertiliser, and to a method of fertiliser production.

This invention seeks to provide a safe plant food which will restore plants which have been damaged by various stresses including physical damage, damage due to extreme temperatures and/or humidities, or pruning as well as chemical damage resulting from treatment with chemicals. The invention aims to assist plants to recover in a short time period without having an adverse affect on the plant itself or on the environment.

Another object of the invention is to provide a mycelial fertiliser including predominant thermoactinomyces which is effective in enhancing the growth of agricultural products.

It is known that plants are easily weakened by externally imposed stresses such as extreme temperature or humidity change, chemical attack, biological damage and physical damage due to the cutting of flower blooms, leaves or other parts of the plant. The freshness and appearance of the plants can rapidly deteriorate when subjected to such stresses.

Chemicals are generally used for protecting plants from various stresses and for restoring them. Most chemicals used are, however, prepared by chemical synthesis. Undesirable biological activities and chemical properties of such chemicals may adversely affect plants, even though the chemicals are effective to restore weakened plants.

Furthermore such chemicals or agricultural agents may cause pollution or environmental damage.

It is also a consequence of such chemicals that the presence of micro-organisms in soils is on the decrease as a result of an increase of use of herbicides and/or chemical fertilisers. As a result, the soil may become sterile, agricultural products may become weakened and environmental damage may result. It is however known to use organic fertiliser to guard against the above dangers and in order to enhance the presence of micro-organisms in the soil. Compost is one such organic fertiliser.

It is desirable to develop a plant food which has an immediate and favourable effect on plants which have been weakened by stress, including extreme temperatures or humidity changes or chemical, biological or physical damage. The plant food should also enhance the plants own restorative mechanism and resistance without causing pollution or environmental damage.

It is also desirable to be able to produce a soil conditioner which does not have any harmful side effects and which has good productivity.

According to a first aspect of the present invention, there is provided a plant food which is characterised in that it comprises pyrolignous acid which contains 97-80 parts by weight of purified pyrolignous acid and 3-20 parts by weight of saccharides containing glucose.

According to a second aspect of the invention there is provided a mycelial fertiliser including purified pyrolignous acid, the fertiliser being characterised in that it comprises predominant thermoactinomyces, and the mycelium, the mycelium being incubated and fermented on a porous carrier with a pH in the range 7.5 to 9.5.

According to a third aspect of the invention there is provided a method of producing mycelial fertiliser having purifed pyrolignous acid, the method being characterised by the use of 50-78 parts by weight of a porous carrier having a particle size of 3-30 mesh and a pH in the region of 7.5-9.5, kneading the carrier with 20-30 parts by weight of an organic substance having a carbon rate below 15% and a water content of 25%-60% together with 2-20 parts by weight of purifed pyrolignous acid, incubating and fermenting the kneaded mixture at a temperature above 15°C, and fermenting by thermoactinomyces for at least two days whilst maintaining the incubation and fermentation temperature at 55°-80°C by aeration.

In all the aspects of the invention set forth above purified pyrolignous acid is an essential constituent. The plant food and mycelial fertiliser of the invention thereby has an immediate and positive effect on weak plants and provide quick fermentation and growing of thermoactinomyces.

The purified pyrolignous acid which is an essential component of this invention is obtained by purification of crude pyrolignous acid. The crude pyrolignous acid is obtained by cooling smoke produced during the thermal decomposition of wood and plants, particularly when wood and plants are carbonised. Crude pyrolignous acid is obtained in quantities of 25-45 parts by weight per 100 parts by weight of seasoned wood. The crude acid is a dark brown liquid having a characteristic irritating odour and containing typically 80%-90% by weight of moisture, although this varies in accordance with the type of wood from which it is produced.

Also present in the crude pyrolignous acid is wood tar (polyaromatics like 3,4-benzpyrene), floating, dust, organic acids such as formic acid, acetic acid, propionic acid, butyric acid, valeric acid, valerolactone, caproic acid, etc. or lactone, alcohols such as methylalcohol arylalcohol etc., esters such as methylacetate, methylformate, aldehydes such as formaldehyde, acetaldehyde, furfural etc. or ketones like acetone, diethyl ketone, methylethylketone.

For use in this invention, the purified pyrolignous acid is obtained by the elimination of oils, floating and

2

dust from the crude acid by a pre-treatment process. The method used to purify the acid is not relevant to this invention. Any suitable purification method can be used. Typical methods are distillation and decantation. In this purification process, wood tar, floating and dust are mainly eliminated.

The purified pyrolignous acid has a pH in the range 3.8-2.6, a specific gravity in the range 1.019-1.010, an organic acid content of 2.5%-5.5% by weight and less than 0.15% by weight of dissolved tar. The purified acid appears as a light blue, yellow or clear liquid, the colour depending on the kind of wood forming the raw material.

This plant food in accordance with the invention will be described in detail in the following.

The plant food comprising pyrolignous acid is composed of 97-80 parts by weight of purified pyrolignous acid and 3-20 parts by weight of saccharide containing glucose.

The saccharide containing glucose may be a saccharide which contains more than 10% by weight of glucose as monosaccharide in solution. Invert sugar which is a mixture of equal quantities of glucose and fructose is one such saccharide. The glucose content of the saccharide is preferably in the range of 3%-20% by weight, most preferably 10% by weight.

If the glucose concentration is less than 3%, then the feeding action of the plant food is not sufficient for weakened plants. On the other hand if the glucose concentration is greater than 20%, then the concentration of root outside is higher than the concentration of root inside as cytoplasm of the root cell of the plant. As a result the cell water from inside the plant flows to the outside by the bio-phenomenen of osmotic pressure and the plant dies.

Purified pyrolignous acid and the solution containing glucose are chosen as the essential components of this invention for the reason that purified pyrolignous acid has the desired effects, such as a sterilising effect, a deodorant and safety effects. As a result the use of this plant food for agricultural purposes and as a soil conditioner can be increased in frequency.

Furthermore the purified pyrolignous acid assists and increases the amount of glucose penetrating to the inside of the plant body from roots or from the leaf surfaces by osmosis. The pressure which results in the solution penetrating the plant body, especially through the roots or through the leaf when a glucose solution alone is used is not stronger than the mixture of glucose solution with purified pyrolignous acid.

If the penetrating pressure is weakened, the restorative effect on the plant is not effective as campher agent. The restorative effect on the plant is revealed by using the solution in accordance with the invention which includes purified pyrolignous acid.

It is believed that acetic acid in the purified pyrolignous acid is important in producing this effect. Furthermore the saccharides containing glucose which form an essential component of the invention are the most effective saccharides as plant foods for plants weakened by stress. This is based on the experimental knowledge of the inventor.

Monosaccharides other than glucose, for example natural typical hexose like mannose and galactose, or natural typical pentose like arabinose and xylose etc. cannot act on a plant weakened by stress in the same way as glucose can. Polysaccharides such as starch or the like cannot penetrate into the root or leaf cell because of their large molecular weight.

Both D-glucose and L-glucose can be used to form the glucose of this invention.

The plant food in accordance with this invention can be applied by spraying.

The plant food can however be prepared for use in other ways such as by mixing with a fertiliser with a suitable diluent, extending agent, suspension agent or emulsifying agent if necessary.

Before use, the plant food in accordance with the invention is preferably diluted to about 50-300 times. The dilution ratio is determined by the kind of plant to be fed, the condition of the plant and the device used for application. When spraying, it is best to spray the leaf part of the plant because water or moisture is generally absorbed from the surface of the leaf. The invention is not however so limited because water can also be absorbed from the plant root. The moisture which permeates from the leaf or the stalk of the plant is less than the absorbed moisture from the root. However the moisture which permeates from the leaf part is immediately effective in improving the health of a weakened plant.

The plant food in accordance with the invention can be used on all types of plants including foliage plants such as house plants, a dwarf tree in a pot (Japanese bonsai), a garden plant, a domesticated plant or the like.

When a plant food in accordance with the invention is sprayed onto a plant, the food permeates into a leaf or a root of the plant and effectively makes each cell of the weakened plant healthy once again, like a campher agent. Namely, for drooping plants, this food makes it be getting leaf-bright and stalk-straight, soonly.

The mycelial fertiliser and the method of making this fertiliser will be described in detail in the following.

The thermoactinomyces preferred for use in the invention are helical germs in thermoactinomyces

EP 0 479 402 A2

particularly growable at elevated temperatures of 55°-80°C. Thermoactinomyces vulgeris, and, thermoactinomyces spora actinobifida (white) and the like are suitable. The thermoactinomyces are selected as the main components of the mycelial fertilizer in accordance with the invention, because they contain very few harmful germs which may have a harmful effect on plants. Furthermore there are plant growth hormones and various vitamins in the metabolites of the thermoactinomyces. The material characteristics and the self-decomposition of thermoactinomyces assists the growth of agricultural products by providing the source of nitrogen supply or nutrition in the soil.

In accordance with the process of this invention, thermoactinomyces is obtained by incubation and fermentation on a porous carrier. In this fermentation system, 2-20 parts by weight of purified pyrolignous acid is kneaded with the porous carrier or is pre-impregnated into the porous carrier. Purified pyrolignous acid is selected for use in this invention because thermoactinomyces ferments and grows immediately on a porous carrier in the presence of purified pyrolignous acid. A fermentation period of at least 5 days is required whilst maintaining the temperature in the range 55°-80°C in order to obtain a mycelial fertiliser which is an effective fertiliser in soil. However by using purified pyrolignous acid, this fermentation period may be reduced to 2 days.

The purified pyrolignous acid is kneaded with an organic substance or is impregnated beforehand into the porous carrier which incubates and ferments thermoactinomyces. The porous carrier is prepared so that it has a pH in the range 7.5-9.5, preferably 8-9 for the effective growth of thermoactinomyces. As a result the growth of filamentary fungi and bacteria etc. can be prevented and a constant amount of thermoactinomyces is maintained in the mycelial fertiliser.

A porous carrier is used because only a porous carrier is able to maintain air and water supplies necessary for the growth of thermoactinomyces during the storage of the fertiliser or during use in soil. As examples of such porous carriers, any organic or inorganic porous carrier can be used if it can be maintained in the pH range 7.5-9.5. Porous carriers which can be used in the invention are typically foams of inorganic, organic or synthetic resin such as charcoal, activated carbon, coal, coke, activated coke, peat, palmculite, perlite, bentonite and urethane foam.

It is preferred that the thermoactinomyces occupy at least 10% of the micro-organism colony in the mycelium. A proportion of theremoactinomyces of more than 50% is even better.

If the proportion of thermoactinomyces is below 50%, the propagation of harmful germs, bacteria or filamentary fungi may occur after use in soil which is disadvantageous. If the thermoactinomyces is at least 50% in the micro-organism colony in the mycelium, the dominant propagation of thermoactinomyces can be secured and a very good fertilising action is achieved.

The method of producing a mycelial fertiliser according to the invention is described in the following.

2-20 parts by weight of purified pyrolignous acid are kneaded with a porous carrier of mesh size 3-30 with the pH being maintained in the region of 7.5-9.5 and together with an organic substance which has a carbon rate below 15% and a water content between 25%-60%. The purified pyrolignous acid is kneaded with the porous carrier and with the organic substance so that the thermoactinomyces quickly and surely grows on the porous carrier. Moreover the use of pyrolignous acid reduces the fermentation period required to obtain mycelial fertiliser in accordance with the invention. After fermentation any purified pyrolignous acid remaining in the fertiliser may itself act as an effective fertiliser.

The content of purified pyrolignous acid is preferably 2-20 parts by weight. If the content is less than 3 parts by weight, the thermoactinomyces formation does not take place at a suitable pace. On the other hand if the content is greater than 30 parts by weight, the water content in the overall fermentation system is too high. Both the above cases represent unfavourable conditions for this invention.

The pH range of the porous carrier is to be between 7.5 and 9.5 which is a range suitable for the growth of thermoactinomyces during production and/or storage of mycelial fertiliser. Because of this narrow pH range, filamentary fungi including many harmful germs cannot grow.

The particle size of the porous carrier is limited to 3-30 mesh.

In the case of a fine porous carrier having a particle size greater than 30 mesh, the fermentation temperature cannot be maintained above 40°C, resulting in insufficient growth of thermoactinomyces. On the other hand, with larger particle sizes less than 3 mesh there are handling difficulties when producing the fertiliser.

The porous carrier which absorbs the purified pyrolignous acid is preferably used in a ratio of 50-78 parts by weight. When the ratio is less than 50 parts by weight it is necessary to correspondingly increase the proportion of undecomposed organic substance, and this is undesirable because it makes it difficult to keep good fermentation conditions, as mentioned below. On the other hand when the proportion exceeds 78 parts by weight, the water supplied from organic substances has to be decreased in quantity in order to keep the correct water content in the whole fermentation system to maintain a favourable fermentation

4

temperature.

In the invention, the porous carrier which has absorbed the purified pyrolignous acid is kneaded with 20-30 parts by weight of an organic substance which itself has a carbon rate less than 15% and a water content of 25%-60%. The carbon rate is limited to less than 15% because if the carbon rate is higher than this the content of cellulose fibres increases in the fermentation system; the amount of cellulose is more demand than the ordinary case and the amount of cellulose in actinomyces becomes dominant in the fermentation system.

The water content of the organic substance is limited to 25%-60%, because the moisture content of the fermentation system in the kneading process is only supplied from the organic substance, and the temperature required for the fermentation of thermoactinomyces is only supported by a moisture content between 30%-40% in this system. If the moisture content of the fermentation system is more than 40% or less than 30%, then the fermentation condition is not enough to ferment thermoactinomyces in either case.

20-30 parts by weight of the organic substance is preferably used in this system. If less than 20 parts by weight is used, then the amount of organic substance provides too little mycelium in each carrier to grow sufficient further mycelium to be attached on each carrier in a uniform dispersion. However if more than 30 parts by weight of organic substance are used, then the proportion of mycelium and porous carrier is not in equilibrium so that the amount of mycelium or the amount of undecomposed organic substance increases in the system. Both the above cases are to be avoided.

The mixture is maintained in an atmosphere at a temperature above 15°C to keep a uniformity of fermentation by using a constant temperature. If this temperature is below 15°C the fermentation temperature does not rise sufficiently for the production process to take place.

After the system has been kept at a certain constant temperature and the outside atmosphere has been shut off, the fermentation temperature is maintained at 55°-80°C, preferably 60°-70°C. When the fermentation temperature is below 55°C, the temperature is maintained at 55°-60°C by feeding air (aeration) at at least 15°C through a pipe and a pump at the bottom part of the fermenting vessel for the time necessary to promote fermentation.

In practice the fermentation temperature will not rise above 80°C for the reason that the cellulose content in the system depends on the amount of organic substance having a carbon rate less than 15%, and the water content depends on the amount of the porous carrier.

After fermentation for at least two days under the above conditions, a mycelial fertiliser is produced having purified pyrolignous acid containing predominant thermoactinomyces as the mycelium with the mycelium having been obtained by incubation and fermentation of a porous carrier that has a pH of 7.5-9.5.

According to the invention, the fermentation period is preferably at least 2 days and more preferably 5 days. The fermentation temperature is to be kept between 55°-80°C for the reason that the thermoactinomyces can't be obtained at the expected proportion rate of thermoactinomyces in the mycelium colony under 55°C. Furthermore anaerobic bacteria grows better in the system above 80°C.

In this invention, the fermentation temperature will not rise to above 80°C. This phenomenen arises from the proportion of raw material that are 20-30 parts by weight of the organic substance (of carbon rate less than 15%), 25%-60% of organic substance with water content 25%-60%, and 50-78 parts by weight of a porous carrier (with particle size of 3-30 mesh).

Accordingly when the the fermentation temperature does not rise enough when water is poured onto the ferment, it is necessary to perform a switch back aeration as known for fermentation processes. However the fermentation temperature should not rise to more than 80°C even with such aeration.

## TEST EXAMPLES

The following examples are described in order to show the effect of the plant food and mycelial fertiliser in accordance with the invention. The invention is not however limited in any way by the following test examples.

## TEST EXAMPLE 1

This example illustrates the effect of a plant food in accordance with the invention in a lawn (Zoysia tenuifolia Willd.)

6 flowerpots identified as A,B,C,D,E and F (20cm in diameter, 30cm in height) were prepared and 2 roots of the said lawn were planted in each pot. The pots were then put in full sunlight for a week without being watered so that the plants drooped.

Each pot was then sprayed with 1 litre of plant food prepared either in accordance with Example 1 or in

EP 0 479 402 A2

accordance with one of comparative Examples 1 to 4 set out below. As a control example, 1 litre of water was sprayed onto the pot F.

After 6 hours, the appearance of Zoysia tenuifolia Willd. was observed and evaluated as shown in Table 1.

The results of this Test Example 1 are shown in Table 1.

Example 1

10mg of $\alpha$-D-glucose was dissolved in 100ml of purified pyrolignous acid to obtain an undiluted solution of plant food. The undiluted solution was then diluted with 50 times its own volume of distilled water.

Comparative Example 1

10mg of sucrose was dissolved in 100ml of purified pyrolignous acid, and thereafter the solution was diluted with 50 times the amount of distilled water.

Comparative Example 2

10mg of wheat starch was dissolved in 100ml of purified pyrolignous acid, and thereafter the solution was diluted with 50 times the amount of distilled water.

Comparative Example 3

10mg of $\alpha$-D-glucose was dissolved in 100ml of distilled water, and thereafter the solution was distilled with 50 times the amount of distilled water.

Comparative Example 4

50mg of $\alpha$-D-glucose was dissolved in 100ml of purified pyrolignous acid, and thereafter the solution was diluted with 50 times the amount of distilled water.

TABLE 1

| | | Appearance of Leaves |
|---|---|---|
| A | Example 1 | A |
| B | Comparative Example 1 | C |
| C | Comparative Example 2 | D |
| D | Comparative Example 3 | C |
| E | Comparative Example 4 | D |
| F | Cotrol Example | C |

[Appearance of Leaves]

A:     bright green and fresh
B:     leaves a little greener
C:     same as before
D:     drooping more than before spraying

TEST EXAMPLE 2

This example illustrates the effect of the mycelial fertiliser in accordance with the invention by the following example of use and comparative examples.

6

Example 2

60 parts by weight of coconut husk charcoal of pH 8.2 was used as the porous carrier. This charcoal passed through a 25 mesh sieve and had a surface area of 200 $m^2$/g.

The porous carrier was kneaded with 25 parts by weight of fowl droppings of pH 8.8 with a water content of 32.9% and a carbon rate of 9.6%, and with 15 parts by weight of purified pyrolignous acid.

The kneaded mixture was placed in a fermenting vessel and the inside temperature of the vessel was maintained at 55°C. The temperature of the mixture was measured during fermentation and the time when the temperature started to rise. At the time when the temperature of the kneaded mixture was lowered below 55°C during fermentation, air was directly pumped into the ferment to raise the temperature at a stroke in starting the rise of the temperature and to control the temperature constantly in the other time. This fermentation was carried out for 3 days.

Throughout the fermentation process, the temperature in the ferment system remained below 80°C.

Composition Analysis

At the end of fermentation the mycelial fertiliser was analysed. The analysis revealed the following results: pH 8.9; total nitrogen 1.65%, pure protein 5.8%, vitamin $B_1$ 0.01mg%, vitamin $B_2$ 0.06mg%, pantothenic acid 0.17mg% and nicotinic acid amide 0.30mg%.

Identification of the germ in the mycelium

To identify the germ in the mycelium, 4 Petri dishes of 9cm in diameter and 1.5cm in depth were filled with a culture medium of agar and distilled water. 20 particles of the above mentioned mycelium were inoculated at equal spaces onto each of the Petri dishes (1-3).

As a comparative example, the fourth Petri dish (4) was treated in the same way as the other Petri dishes except that it was inoculated with untreated coconut-husk charcoal particles which passed through a 25 mesh sieve.

The four Petri dishes (1-4) were cultured at 25°C for four days. Actinomyces and filamentary fungi were classified and analysed by the number of colonies generated. In the culture, the medium was sterilised in an autoclave at 120°C under one atmosphere pressure for 20 minutes. As a result, in the Petri dish (1) 7.4 colonies of thermoactinomyces existed per particle of the sample (on average) while 5.0 colonies of filamentary fungi existed.

In the Petri dish (2), 4.2 colonies of thermoactinomyces existed per particle of the sample (on average) while 0.0.4 colonies of filamentary fungi existed. Among these, in thermoactinomyces, helical germs were dominant and in filamentary fungi Clsfodpotium group, Penicillium group and Nigrospora group were found. Since Cladosporium and Penicillium in these filamentary fungi were found also from the Petri dish of only coconut-husk active carbon particles (which were used as a comparative example), these were considered to be germs transmitted from the air.

Accordingly theremoactinomyces were practially dominant in the micro-organism colonies of the mycelial fertiliser.

The results of these tests are described in the following.

## TABLE 2

| | Content Rate of purified pyrolignous acid | ORGANICS | | | | CARRIER | | | |
|---|---|---|---|---|---|---|---|---|---|
| | | ※ A | ※ B | ※ C | ※ D | ※ E | ※ F | ※ G | ※ H |
| Example 3 | 20 | 10 | 40 | ※1 | 20 | 30 | ※3 | 8.4 | 60 |
| Example 4 | 15 | 12 | 30 | ※1 | 20 | 10 | ※3 | 8.3 | 65 |
| Example 5 | 10 | 10 | 35 | ※2 | 25 | 20 | ※3 | 8.0 | 65 |
| Example 6 | 5 | 15 | 35 | ※2 | 30 | 15 | ※3 | 8.0 | 65 |
| Comparative Example 5 | 0 | 10 | 40 | ※1 | 30 | 30 | ※3 | 8.4 | 70 |
| Comparative Example 6 | 50 | 10 | 30 | ※1 | 20 | 25 | ※3 | 8.4 | 30 |
| Comparative Example 7 | 15 | 40 | 30 | ※1 | 20 | 30 | ※3 | 8.3 | 65 |
| Comparative Example 8 | 10 | 10 | 65 | ※2 | 50 | 20 | ※3 | 8.0 | 40 |

※A ···Rate of Carbon.  ※B ···Moisture Content.  ※C ···Species

※D ···Content Rate.    ※E ···Mesh.         ※F ···Species

※G ···PH.


※1    fowl droppings
※2    a mixture of cow dung and dry grass
※3    charcoal


Table 2 shows examples and comparative examples in which various types of carriers and organic substances were tested, the quantity of purified pyrolignous acid was varied and all the examples were treated under the same fermentation conditions as applied in Example 2.

(Use Example 1)

Method

1) Scale of test; Pot test (1/5000 a pot)
2) Test item; Korean lawn grass (Zoysia temuifolia Willd.)
3) Test soil; Sandy soil

4) Test period; April - Oct.

5) Test section

1. Control section; 3 pots

2. Each example section; 3 pots each using 10% in soil, and a further 3 pots each using 20% in soil.

3. Each comparative example section; 3 pots each using 10% in soil, and 3 pots each using 20% in soil.

In addition, 3g of conventional compound fertiliser was used for each pot.

The test soil was coarse sand 90.1%, fine sand 9.0%, silt 0.0%, clay 0.9%, base substitution capacity 0.44 mg/100g and pH 6.8.

The weight of stem was measured after 6 months.

The average value of each is shown together in Table 3.

## TABLE 3

| | Weight of Stem | |
|---|---|---|
| | 10% parts | 20% parts |
| Example  2 | 22.5 | 37.1 |
| Example  3 | 20.2 | 35.6 |
| Example  4 | 19.7 | 33.8 |
| Example  5 | 21.1 | 35.8 |
| Example  6 | 18.9 | 31.7 |
| Comparative Example  5 | 17.6 | 25.3 |
| Comparative Example  6 | 15.4 | 25.4 |
| Comparative Example  7 | 12.1 | 20.5 |
| Comparative Example  8 | 14.9 | 28.1 |
| Control | 10.7 | |

(Use Example 2)

Method

1 Scale of test; Cultivating test in soil (10m$^2$/area, area system)

2 Test item; Melon (Cucumis melo L.)

3 Test soil; Sandy soil

4 Test period; March

5 Test Type; Harvest time at early summer

(1) Planting density;     in a line with 45 cm intervals between each plant on a ridge of 1.5m width

(2) Vine arrangement;     every parent vine has 22 knots being 2 elder vines each of which has 2 fruits

(3) Cultivation type;      Vertical cultivation
6 Test Classification
Control Each example
10% in soil
20% in soil
Each comparative example
10% in soil
20% in soil

This use test is conducted by using the melon (Cucumis melo L.) in Use Example 2, and the length of vine and the number of leaves in the melon after 1 month were measured.

The average values are shown together in Table 4.

## TABLE 4

| | 10% parts | | 20% parts | |
|---|---|---|---|---|
| | ※ I | ※ J | ※ I | ※ J |
| Example 2 | 38.1 | 10 | 42.3 | 11 |
| Example 3 | 36.4 | 10 | 40.0 | 11 |
| Example 4 | 36.9 | 9 | 40.5 | 10 |
| Example 5 | 37.5 | 10 | 41.1 | 11 |
| Example 6 | 37.0 | 10 | 40.8 | 11 |
| Comparative Example 5 | 34.5 | 8 | 39.7 | 9 |
| Comparative Example 6 | 29.7 | 6 | 35.1 | 7 |
| Comparative Example 7 | 28.1 | 5 | 33.4 | 6 |
| Comparative Example 8 | 28.9 | 6 | 34.3 | 7 |
| Control | 25.3 | 5 | | |

※ I ⋯ The Length of Vine (cm)

※ J ⋯ The Number of Leaves (piece)

**Claims**

1. A plant food which is characterised in that it comprises pyrolignous acid which contains 97-80 parts by weight of purified pyrolignous acid and 3-20 parts by weight of saccharides containing glucose.

2. A mycelial fertiliser including purified pyrolignous acid, the fertiliser being characterised in that it comprises predominant thermoactinomyces, and the mycelium, the mycelium being incubated and fermented on a porous carrier with a pH in the range 7.5 to 9.5.

3. A method of producing mycelial fertiliser having purifed pyrolignous acid, the method being characterised by the use of 50-78 parts by weight of a porous carrier having a particle size of 3-30 mesh and a pH in the region of 7.5-9.5, kneading the carrier with 20-30 parts by weight of an organic substance having a carbon rate below 15% and a water content of 25%-60% together with 2-20 parts by weight of purifed pyrolignous acid, incubating and fermenting the kneaded mixture at a temperature above 15°C, and fermenting by thermoactinomyces for at least two days whilst maintaining the incubation and fermentation temperature at 55°-80°C by aeration.